# EUROPÄISCHE PATENTANMELDUNG

(11) **EP 1 450 000 A1**
(43) Veröffentlichungstag der Anmeldung: **25.08.2004**
(21) Anmeldenummer: 04012664.1
(22) Anmeldetag: 05.02.2001
(51) Int. Cl.: E06B 3/02

(54) **Tür mit transparanter, elektrisch leitender Schicht**

(62) Teilanmeldung aus: 01102498.1
(71) Anmelder: Schott Spezialglas GmbH, 55122 Mainz (DE)
(72) Erfinder: Schneider, Rolf A. O., 72108 Rottenburg (DE)
(74) Vertreter: Dr. Weitzel & Partner

(57) **Zusammenfassung**

Die Erfindung betrifft eine Tür mit einem Türkörper, der ganz oder teilweise aus Glas besteht und der eine elektrische Einrichtung aufweist, wobei der Türkörper mit mindestens einer transparenten, elektrisch leitenden Schicht versehen ist, dadurch gekennzeichnet, dass die transparente, elektrisch leitende Schicht an einer Außenkante der Türfläche aus Glas an eine Strom-, Steuer- oder Signalleitung angeschlossen ist.

## Beschreibung

Die Erfindung betrifft eine Tür mit einem Türkörper, der ganz oder teilweise aus Glas besteht und die eine elektrische Einrichtung aufweist.

Türen, in die elektrische Einrichtungen integriert sind, sind bekannt. Beispielsweise ist es aus der DE-U 299 06 699 bekannt, in einen Türgriff einer Tür eine Beleuchtungseinrichtung zu integrieren.

Aus der US 4,248,015 ist ein Glasfenster oder eine Glastüre bekannt geworden, die einen optisch transparenten elektrischen Leiter umfasst, der als Heizelement dient und die Glasscheibe bzw. die Glastüre auf eine Temperatur erwärmen kann, die oberhalb des Taupunktes der umgebenden Luft liegt.

Aus der WO 01/01191 ist ein Glaselement bekannt geworden, bei dem die Glasoberflächen mit transparenten elektrisch leitenden Schichten versehen sind, die dazu dienen, eine Flüssigkristallschicht anzusteuern, so dass die Transmission zwischen zwei Glasplatten durch den Stromfluss eingestellt werden kann.

Der Erfindung liegt die Aufgabe zugrunde, eine Tür der eingangs genannten Art zu schaffen, die eine Vielzahl von Kommunikations- und Funktionseinrichtungen aufnehmen kann.

Zur Lösung dieser Aufgabe dienen die Merkmale des Anspruchs 1.

Die Erfindung sieht in vorteilhafter Weise vor, dass der Türkörper in der aus Glas bestehenden Fläche mit mindestens einer transparenten, elektrisch leitenden Schicht versehen ist. Mit Hilfe einer derartigen transparenten, elektrisch leitenden Schicht, z. B: einer ITO-Beschichtung, können unsichtbar Stromversorgungsleitungen und Signalleitungen für Funktions- und Kommunikationselemente vorgesehen werden, die aufgrund ihrer Transparenz nicht sichtbar sind.

Vorzugsweise sind mindestens zwei transparente, elektrisch leitende bahnförmige Schichten vorgesehen, die Bestandteil des Stromkreises sind und einerseits an einer in den Türkörper integrierten elektrischen Einrichtung und andererseits mit einer Stromquelle verbunden sind. Mit Hilfe der elektrisch leitenden bahnförmigen Schichten können Ströme bis zu 1 A übertragen werden, ohne dass elektrische Leiter in dem Türkörper aus Glas sichtbar sind.

Mehrere bahnförmige transparente elektrisch leitende Schichten können somit Strom- und Signalleitungen für eine in die aus Glas bestehende Tgürfläche oder in einen Türgriff aus Glas integrierte elektrische Einrichtung bilden, wobei die elektrische Einrichtung eine Bedien-, Steuer-, Kommunikations- und/oder Beleuchtungseinrichtung ist.

Die in den Türkörper aus Glas integrierte elektrische Einrichtung kann eine transparente Glastastatur aufweisen, mit deren Hilfe unterschiedliche elektrische Einrichtungen, insbesondere Funktions- und Kommunikationseinrichtungen gesteuert und bedient werden können.

Die elektrische Einrichtung kann eine Sensoreinrichtung aufweisen, wobei mehrere transparente elektrisch leitende Schichten in dem Türkörper einerseits die Sensoreinrichtung mit einer Stromquelle verbinden und andererseits ein Sensorsignal an eine Auswerteeinrichtung übertragen.

Es kann auch vorgesehen sein, dass die mindestens eine elektrisch leitende Schicht Bestandteil einer Sensoreinrichtung ist und an einer transparenten Steuer- oder Signalleitung angeschlossen ist.

Die Sensoreinrichtung kann beispielsweise eine Türbetätigungseinrichtung steuern.

Ein in den Türkörper integrierte Beleuchtungseinrichtung kann beispielsweise aus einer oder mehreren Leuchtdioden (LED) bestehen. Diese Beleuchtungseinrichtung ist bei einer Tür aus Glas geeignet, die Türkanten zu beleuchten oder bestimmte Funktions- und Kommunikationselemente anzuzeigen.

Die transparente, elektrisch leitende Schicht ist an einer Außenkante der Türfläche aus Glas an eine Strom-, Steuer- oder Signalleitung angeschlossen. Auf diese Weise sind die transparenten Leitungsbahnen der Tür mit Stromversorgungs-Steuerungssignalleitungen verbunden, die beispielsweise zu Steuergeräten führen oder die beispielsweise Antriebe steuern, z. B. einen Antriebsmotor zum Öffnen der Tür.

Die Türfläche aus Glas besteht vorzugsweise aus einer Verbundglasscheibe und/oder einer Isolierglasscheibe.

Im folgenden werden unter Bezugnahme auf die Zeichnungen Ausführungsbeispiele der Erfindung näher erläutert:

Es zeigen:
- Figur 1: eine Doppeltüre aus Glas mit mehreren in die Glasfläche integrierten elektrischen Einrichtungen,
- Figur 2: ein zweites Ausführungsbeispiel einer Glastüre,
- Figur 3: ein Ausführungsbeispiel einer Eingangstüre aus Glas, und
- Figur 4: ein in eine Glastüre integrierbares Bedienfeld.

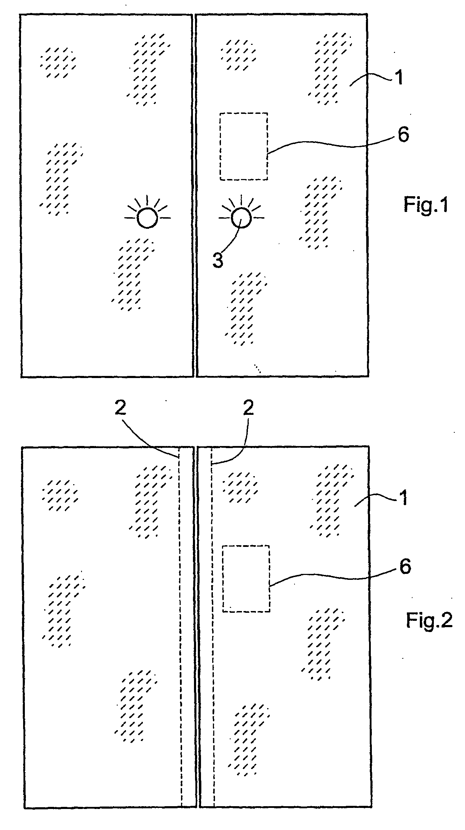

Figur 1 zeigt eine Tür 1, die als Pendel- oder Schiebetür, z. B. als Automatiktür, innerhalb des Gebäudes oder in einem Eingangsbereich eines Gebäudes vorgesehen sein kann. Der Türkörper der Tür 1 besteht ganz oder zumindest teilweise aus Glas. Die aus Glas bestehende Türfläche ist mit mindestens einer transparenten, elektrisch leitenden Schicht versehen, die bahnförmig auf den Türkörper aus Glas aufgetragen ist und auf diese Weise in den Türkörper integrierte elektrische Einrichtungen mit Strom versorgen kann. Es sind mindestens zwei transparente elektrisch leitende bahnförmige Schichten vorgesehen, die mindestens eine elektrische Einrichtung mit einer Stromquelle oder mit einer Steuerungseinrichtung verbinden. Die elektrischen Einrichtungen in dem Türkörper sind somit unsichtbar mit Stromversorgungs- und Steuerungseinrichtungen verbunden, so dass die Transparenz der Tür aus Glas erhalten bleibt. Die elektrisch leitenden Schichten bestehen vorzugsweise aus ITO-Beschichtungen, wie sie in der EP-A-0 995 199 beschrieben sind.

Derartige transparente Beschichtungen sind in der Lage, Ströme in der Größenordnung von bis zu 1 A zu übertragen, ohne dass sich die transparenten Schichten von der Glasoberfläche, z. B. durch Erwärmung, lösen.

Mehrere transparente elektrisch leitende Schichten können auch übereinander angeordnet werden, wenn eine Isolierschicht zwischen den elektrisch leitenden Schichten vorgesehen wird. Die Integration dieser Schichten ist besonders vorteilhaft bei einer Verbundglasscheibe, die aus mehrere Glasschichten besteht. Insbesondere im Fall einer Eingangstür kann der Türkörper eine Isolierglasfläche bilden.

Bei dem Ausführungsbeispiel der Figur 1 wird beispielsweise mit Hilfe der transparenten elektrisch leitenden Schichten durch Bildung eines Stromkreises die Beleuchtung der Türgriffe 3 ermöglicht. Desweiteren kann in die Türfläche aus Glas ein Bedienfeld 6 integriert sein, in dem mehrere elektrische Einrichtungen, z. B. Bedien-, Steuer-, Kommunikations- und/oder Beleuchtungseinrichtungen zusammengefasst sind.

Das Bedienfeld 6 kann auch eine transparente Glastastatur 12 aufweisen, wie sie beispielsweise in der WO 99/46788 beschrieben ist.

Figur 2 zeigt ein weiteres Ausführungsbeispiel einer Tür 1 mit zwei Türflügeln, die im inneren Kantenbereich der Türflügel eine Beleuchtungseinrichtung 2 aufweist, die sich längs der Türkante erstreckt. Diese Beleuchtungseinrichtung, die beispielsweise aus Leuchtdioden (LED) gebildet sein kann, ist insbesondere geeignet, bei Dunkelheit den Öffnungs- oder Schließzustand der Türe anzuzeigen. Auch kann die Beleuchtungseinrichtung über einen Bewegungssensor aktiviert werden, um eine Person rechtzeitig über den Schließzustand einer Glastür zu informieren, um Unfälle zu vermeiden. Beispielsweise wäre es möglich, dass die Beleuchtungseinrichtung 2 bei Annäherung einer Person ein Blinksignal abgibt.

Auch die Tür 1 gemäß Figur 2 kann mit einem Bedienfeld 6 versehen sein.

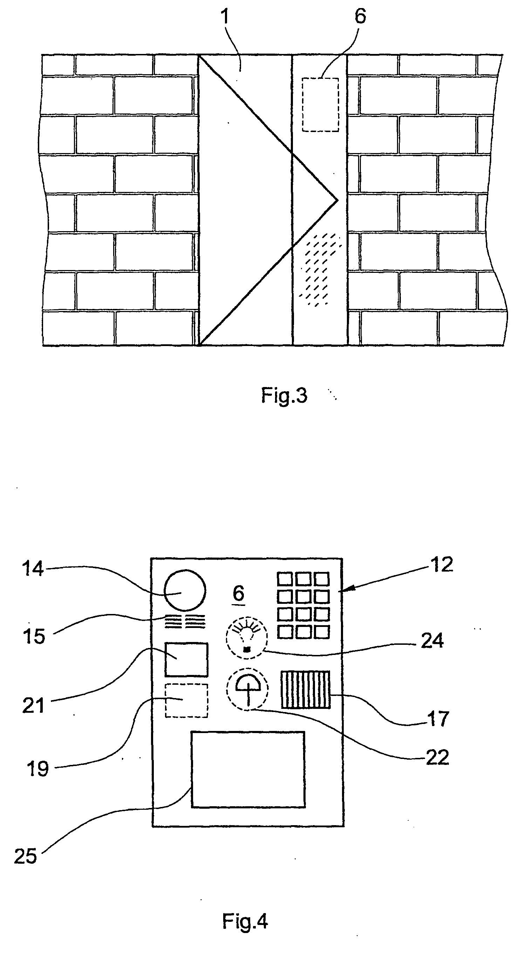

Figur 3 zeigt das Ausführungsbeispiel einer Eingangstür eines Gebäudes mit einer Bedienfläche 6.

Die Bedienfläche 6, die in allen Ausführungsbeispielen integriert sein kann, ist beispielhaft in Figur 4 wiedergegeben. Die Bedienfläche 6 kann mehrere Hausinstallationselemente integrieren.

Beispielsweise kann das Bedienfeld 6 als Kommunikationseinrichtung eine audiovisionelle Überwachungseinrichtung mit einer Videokamera 14 und einem Mikrofon 15 enthalten. Die Kommunikationseinrichtungen können mit einem Bewegungsmelder 17 aktiviert werden, wobei der Bewegungsmelder auch außerhalb des Bedienfeldes 6 angeordnet sein kann.

Die Funktionseinrichtungen für Türfunktionen können beispielsweise aus einer Klingeleinrichtung, einer Türöffnungseinrichtung oder einer kombiniert mechanisch/elektronischen Schließanlage bestehen.

Eine derartige kombiniert mechanisch/elektronischen Schließanlage kann ein Codeschloss aufweisen, wobei der Transponder für dieses Codeschloss in das Bedienfeld 6 integriert sein kann.

Die Türöffnungseinrichtung bzw. die Schließanlage kann auch mit einem Personenidentifikationssystem gekoppelt sein, wobei das Personenidentifikationssystem aus einer audiovisionellen Personenerkennungsanlage oder einem Fingerabdruck-Sensorsystem 21 bestehen kann.

Beide Personenidentifikationssysteme sind geeignet für eine Integration in das Bedienfeld 6 aus Glas.

Das Bedienfeld 6 aus Glas ist vorzugsweise aus mindesten zwei Glasschichten, nämlich einer Trägerglasscheibe und einer Deckglasscheibe aus Dünnglas gebildet, die auf den sich gegenüberliegenden Seiten transparent elektrisch leitend beschichtet sind, so dass die Deckglasscheibe aus Dünnglas als transparente, in Verbindung mit einer Steuerung frei programmierbare Tastaturfläche genutzt werden kann. Die Deckglasscheibe aus Dünnglas kontaktiert bei Druckbeaufschlagung die darunter liegende Trägerglasscheibe und stellt dadurch einen Kontakt her, der innerhalb der Tastaturfläche lokalisiert werden kann und somit bestimmten Funktionen zugeordnet werden kann.

Das Bedienfeld 6 zeigt einen in die Glasoberfläche integrierten Klingelknopf 22 als Beispiel einer Funktionseinrichtung. Das Symbol für die Funktions- oder Kommunikationseinrichtungen kann auf die Glasoberfläche des Bedienfeldes 6 aufgedruckt sein. Selbstverständlich enthält die Glasfläche eine Vielzahl von anderen Funktionsflächen, beispielsweise auch eine Zehnertastatur 12, mit der ein Codeschloss betätigt werden kann oder mit der andere Kommunikationsund Funktionseinrichtungen angesteuert werden können.

Die Glasoberfläche des Bedienfeldes kann auch mit einem Schallwandler 19 gekoppelt sein, so dass die gesamte Glasoberfläche als Schallübertrager, z. B. für eine Wechselsprecheinrichtung, verwendet werden kann.

Das Bedienfeld 6 kann auch eine Videokamera 14 aufnehmen, die aufgrund ihrer Integration in die Glasfläche von außen, insbesondere bei getöntem Glas, nicht ohne weiteres erkennbar ist. Das Bedienfeld 6 kann auch mit Infrarotbleuchtungsmittel versehen sein, um eine unbemerkte Beleuchtung für die Videokamera 14 vorzusehen.

Auf dem Bedienfeld 6 sind lediglich zwei Symbole, nämlich für eine Beleuchtungstaste 24 und eine Klingeltaste 22 dargestellt. Die Symbole können entweder aufgedruckt sein oder durch eine entsprechende LED-Beleuchtung in das Bedienfeld 6 aus Glas integriert sein.

## Patentansprüche

1. Tür mit einem Türkörper, der ganz oder teilweise aus Glas besteht und der eine elektrische Einrichtung aufweist, wobei der Türkörper mit mindestens einer transparenten, elektrisch leitenden Schicht versehen ist, **dadurch gekennzeichnet, dass** die transparente, elektrisch leitende Schicht an einer Außenkante der Türfläche aus Glas an eine Strom-, Steuer- oder Signalleitung angeschlossen ist.

2. Tür nach Anspruch 1, **dadurch gekennzeichnet, dass** mindestens zwei transparente elektrisch leitende bahnförmige Schichten vorgesehen sind, die Bestandteil eines Stromkreises sind und einerseits an einer in den Türkörper integrierten elektrischen Einrichtung und andererseits mit einer Stromquelle verbunden sind.

3. Tür nach Anspruch 1 oder 2, **dadurch gekennzeichnet, dass** mehrere bahnförmige transparente elektrisch leitende Schichten Strom- und Signalleitungen für eine in die aus Glas bestehende Fläche oder in einen Türgriff integrierte elektrische Einrichtung, z. B. eine Bedien-, Steuer-, Kommunikations- und/oder Beleuchtungseinrichtung bilden.

4. Tür nach einem der Ansprüche 1 bis 3, **dadurch gekennzeichnet, dass** die elektrische Einrichtung eine transparente Glastastatur (12) aufweist.

5. Tür nach Anspruch 3, **dadurch gekennzeichnet, dass** die elektrische Einrichtung eine Sensoreinrichtung aufweist, und dass mehrere transparente elektrisch leitende Schichten einerseits die Sensoreinrichtung mit einer Stromquelle verbinden und andererseits ein Sensorsignal an eine Auswerteeinrichtung übertragen.

6. Tür nach Anspruch 2, **dadurch gekennzeichnet, dass** die mindestes eine elektrisch leitende Schicht Bestandteil einer Sensoreinrichtung ist und an einer transparenten Steuer- oder Signalleitung angeschlossen ist.

7. Tür nach einem der Ansprüche 5 oder 6, **dadurch gekennzeichnet, dass** die Sensoreinrichtung eine Türbetätigungseinrichtung steuert.

8. Tür nach einem der Ansprüche 1 bis 7, **dadurch gekennzeichnet, dass** die Beleuchtungseinrichtung eine oder mehrere Leuchtdioden (LED) umfasst.

9. Tür nach einem der Ansprüche 1 bis 8, **dadurch gekennzeichnet, dass** die aus Glas bestehende Türfläche aus einer Verbundglasscheibe und/oder einer Isolierglasscheibe besteht.

10. Tür nach einem der Ansprüche 1 bis 9, **dadurch gekennzeichnet, dass** der Türgriff (3) mit integrierten Bedien-, Steuer-, Kommunikationsund/oder Beleuchtungseinrichtungen aus Glas besteht.
